# EUROPEAN PATENT APPLICATION

(11) **EP 4 810 943 A1**
(43) Date of publication of application: **23.09.2026**
(21) Application number: 25203146.3
(22) Date of filing: 18.09.2025
(51) Int. Cl.: G01N 21/88

(54) **OPTICAL INSPECTION APPARATUS AND OPTICAL INSPECTION METHOD**

(30) Priority: 19.03.2025 JP 2025045700
(71) Applicant: KABUSHIKI KAISHA TOSHIBA, Kawasaki-shi, Kanagawa (JP); Toshiba Information Systems (Japan) Corporation, Kawasaki-shi, Kanagawa 210-8540 (JP)
(72) Inventor: OHNO, Hiroshi, Kawasaki-shi, Kanagawa (JP); KANO, Hiroya, Kawasaki-shi, Kanagawa (JP); OKANO, Hideaki, Kawasaki-shi, Kanagawa (JP); OHNO, Akifumi, Kawasaki-shi, Kanagawa (JP); TAKAGI, Yoshiaki, Kawasaki-shi, Kanagawa (JP)
(74) Representative: Hoffmann Eitle

(57) **Abstract**

In an approach, an optical inspection apparatus includes: an illumination portion configured to emit illumination light including at least telecentric illumination; and an imaging portion configured to simultaneously capture telecentric light and entocentric light.

## Description

### FIELD

The present disclosure relates to an optical inspection apparatus and an optical inspection method.

### BACKGROUND

Non-contact inspection of objects is important in various industries. For example, there is a method in which a color (wavelength spectrum) of a light beam dispersed using a diffraction grating or a wavelength filter is made to correspond to a light beam direction on a one-to-one basis, and a fine structure (minute defect) on an object surface or in the object is inspected.

### BRIEF DESCRIPTION OF DRAWINGS

FIG. 1 is a schematic cross-sectional view of an optical inspection apparatus according to an approach.
FIG. 2 is a schematic cross-sectional view illustrating a relationship between an object to be inspected and an imaging portion of the optical inspection apparatus according to a first approach.
FIG. 3 is a schematic cross-sectional view illustrating a relationship between the object to be inspected and an illumination portion of the optical inspection apparatus according to the first approach.
FIG. 4 is a schematic view illustrating a composite opening in a plane orthogonal to an imaging optical axis of an imaging portion of the optical inspection apparatus according to the first approach.
FIG. 5 is a schematic cross-sectional view illustrating a relationship between an object to be inspected and an imaging portion of an optical inspection apparatus according to a second approach.
FIG. 6 is a schematic cross-sectional view illustrating a relationship between the object to be inspected and an illumination portion of the optical inspection apparatus according to the second approach.
FIG. 7 is a schematic view illustrating a composite opening in a plane orthogonal to an imaging optical axis of the imaging portion of the optical inspection apparatus according to the second approach and an illumination opening in a plane orthogonal to an illumination optical axis of the illumination portion.
FIG. 8 is a schematic cross-sectional view illustrating a relationship between an object to be inspected and an imaging portion of an optical inspection apparatus according to a third approach.
FIG. 9 is a schematic cross-sectional view illustrating a relationship between an object to be inspected and an imaging portion of an optical inspection apparatus according to a fourth approach.
FIG. 10 is a schematic view illustrating a composite opening in a plane orthogonal to an imaging optical axis of the imaging portion of the optical inspection apparatus according to the fourth approach.
FIG. 11 is a schematic view illustrating a composite opening in a plane orthogonal to the imaging optical axis of the imaging portion of the optical inspection apparatus according to the fourth approach and an illumination opening in a plane orthogonal to an illumination optical axis of an illumination portion.
FIG. 12 is a schematic cross-sectional view illustrating a relationship between an object to be inspected and an imaging portion of an optical inspection apparatus according to a fifth approach.
FIG. 13 is a schematic view illustrating a composite opening in a plane orthogonal to an imaging optical axis of the imaging portion of the optical inspection apparatus according to the fifth approach and an illumination opening in a plane orthogonal to an illumination optical axis of an illumination portion.

### DETAILED DESCRIPTION

Hereinafter, each approach will be described with reference to the drawings. The drawings are schematic or conceptual, and a relationship between a thickness and a width of each portion, a ratio of sizes between portions, and the like are not necessarily the same as actual ones. In addition, even in the case of representing the same portion, dimensions and ratios may be represented differently from each other depending on the drawings. In the present specification and each drawing, the same elements as those described above with respect to the previously described drawings are denoted by the same reference numerals, and the detailed description thereof is appropriately omitted.

It is an object of an approach to provide an optical inspection apparatus and an optical inspection method capable of inspecting a fine structure (minute defect) of an object surface without dispersing light from an illumination portion (light source).

According to the approach, an optical inspection apparatus includes: an illumination portion configured to emit illumination light including at least telecentric illumination; and an imaging portion configured to simultaneously capture telecentric light and entocentric light.

In the present specification, light is a type of electromagnetic wave, and includes gamma rays, X-rays, ultraviolet rays, visible light, infrared rays, radio waves, and the like. In the present approach, light is visible light, and for example, the wavelength is in a region of 400 nm to 700 nm. It is assumed that the infrared ray has a wavelength in a region of about 700 nm to about 1 mm including near-infrared, mid-infrared, and far-infrared. The ultraviolet ray including the extreme ultraviolet ray has a wavelength in a region of about 10 nm to 400 nm.

### (First Approach)

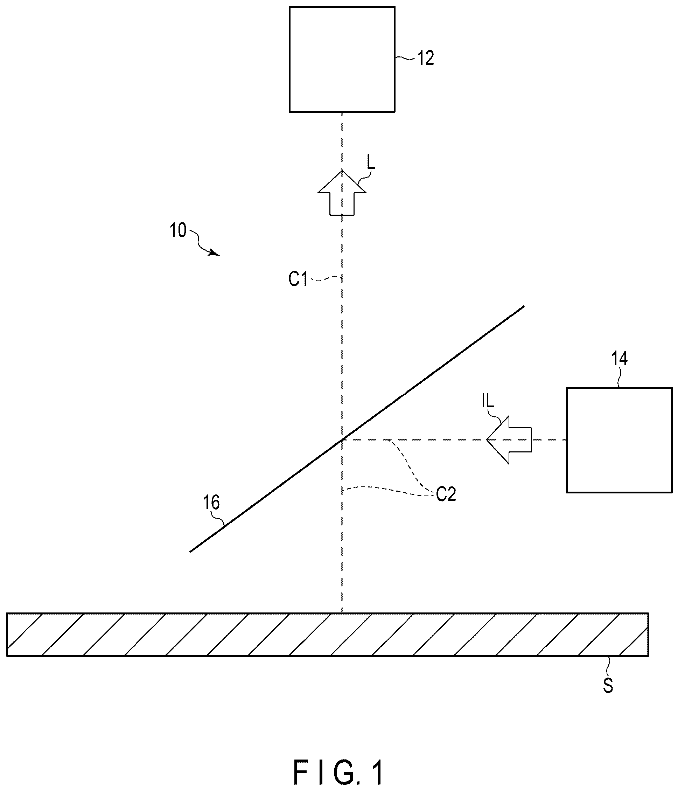

Hereinafter, an optical inspection apparatus 10 according to the present approach will be described with reference to FIGS. 1 to 4.

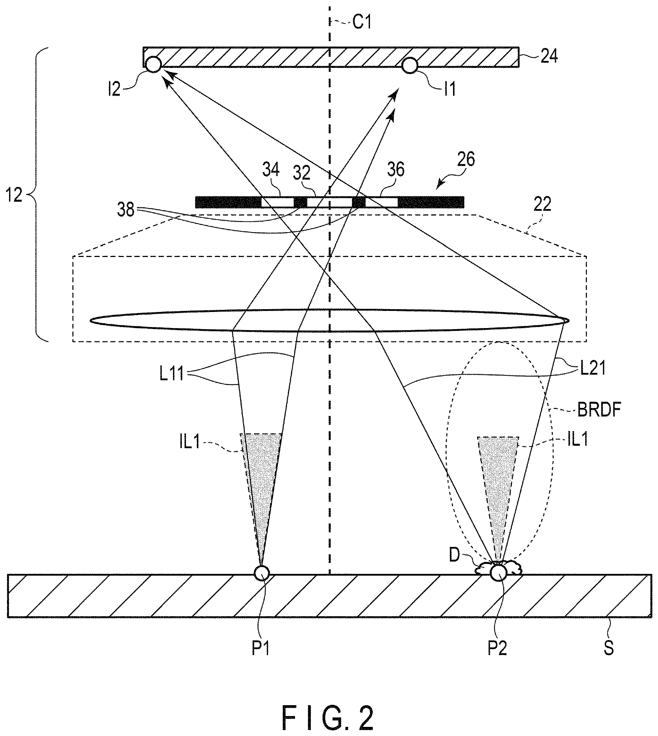

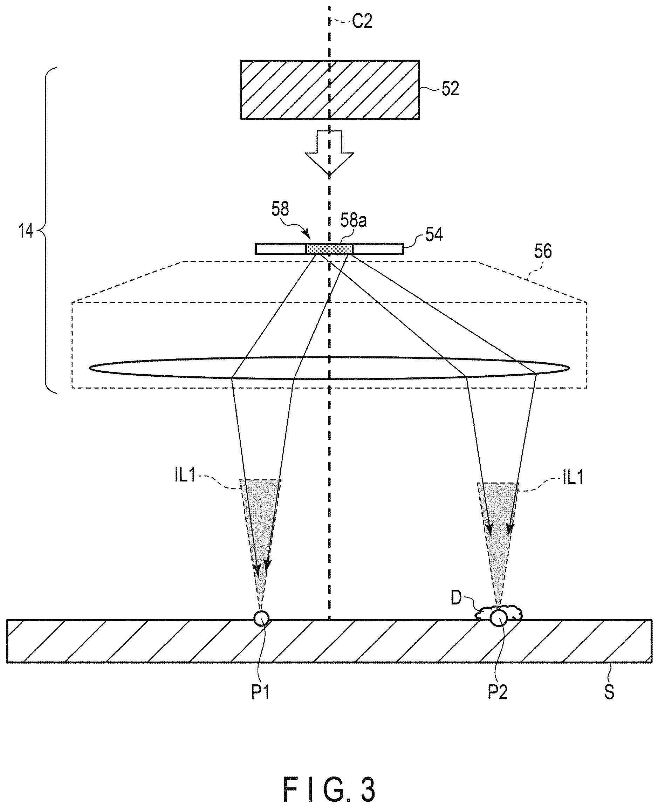

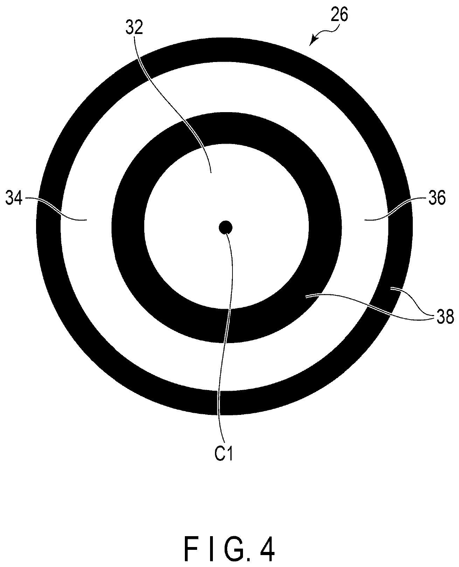

FIG. 1 is a schematic cross-sectional view of the optical inspection apparatus 10 according to the present approach. FIG. 2 is a schematic cross-sectional view illustrating a relationship between an object S to be inspected and an imaging portion 12. FIG. 2 also illustrates a light flux of an illumination light incident on the object S. FIG. 3 is a schematic cross-sectional view illustrating a relationship between the object S to be inspected and an illumination portion 14. FIG. 4 is a schematic view of a composite opening 26 in a plane orthogonal to an imaging optical axis C1.

As illustrated in FIG. 1, the optical inspection apparatus 10 according to the present approach includes the imaging portion 12 that images reflected light L from the object S, and the illumination portion 14 that irradiates the object S with an illumination light flux (illumination light beam flux) IL.

In the present approach, the object S to be inspected illustrated in FIGS. 1 to 3 may transmit or reflect light. Alternatively, the object S to be inspected may be translucent. A point on a surface of the object S or inside the object S is referred to as an object point. Hereinafter, unless otherwise specified, it is assumed that the object S is reflective and the object point is on a surface of the object S. The surface of the object S may be referred to as an object surface or an object plane.

As illustrated in FIG. 1, an illumination optical axis C2 of the illumination portion 14 (see FIG. 3) and an imaging optical axis C1 of the imaging portion 12 (see FIG. 2) are caused to coincide with each other using a beam splitter 16. Such an illumination system is referred to as coaxial epi-illumination. If the object S is transparent, it is not necessary to use the beam splitter 16, and the object S may be disposed so as to be sandwiched between the imaging portion 12 and the illumination portion 14. The beam splitter 16 may be a polarized beam splitter or a non-polarized beam splitter.

The imaging portion 12 illustrated in FIG. 2 can image telecentric light and entocentric light at the same time. The imaging portion 12 includes an image forming optical element 22, an image sensor 24, and a composite opening 26.

The image forming optical element 22 can form an image of light. The image forming optical element 22 may be, for example, a single lens, a set lens including a plurality of lenses, a concave mirror, a Fresnel lens, a Fresnel zone plate, a metalens, a diffraction grating, a gradient index lens (GRIN lens), or the like. That is, the image forming optical element 22 may be any element as long as light can be imaged. A surface on which a set of points at infinity is imaged by the image forming optical element 22 is defined as a focal plane. The focal plane and its vicinity are referred to as a focal plane region. The optical axis (imaging optical axis) C1 of the image forming optical element 22 is a straight line orthogonal to the focal plane. It is assumed that light emitted from a sufficiently distant point on the optical axis C1 is imaged at a point where the optical axis C1 and the focal plane intersect. This point is referred to as a focal point.

The image forming optical element 22 has a main surface geometrically determined. A distance defined by the focal plane of the image forming optical element 22 and the main surface closest thereto is defined as a focal length of the image forming optical element 22.

The image forming optical element 22, the focal point, the focal plane, and the focal length in the imaging portion 12 are defined as the image forming optical element 22 for imaging, the imaging focal point, the imaging focal plane, and the imaging focal length, respectively. On the other hand, an image forming optical element 56, a focal point, a focal plane, and a focal length in the illumination portion 14, which will be described later, are defined as an image forming optical element for illumination, an illumination focal point, an illumination focal plane, and an illumination focal length, respectively.

The focal plane is also referred to as a Fourier plane. The Fourier plane in the imaging portion 12 is defined as an imaging Fourier plane. A Fourier plane in the illumination portion 14 is defined as an illumination Fourier plane.

It is assumed that the image forming optical element 22 for imaging of the present approach is a set lens including a plurality of lenses. Here, this is referred to as an imaging lens. However, in FIG. 2, for the sake of simplicity, the image forming lens which is a set lens is schematically drawn by one lens. Furthermore, the image forming optical element 22 for imaging is not limited thereto, and may be any element as long as it forms an image of light. In the cross-sectional view of FIG. 2, the imaging optical axis C1 of the image forming optical element 22 for imaging is included in the present cross-section.

The image sensor 24 may be a line sensor or an area sensor. However, the image sensor 24 is not limited thereto, and any image sensor may be used as long as the image sensor has pixels capable of receiving light and converting the light into a signal. The image sensor 24 may be a color image sensor or a monochrome image sensor. Alternatively, the image sensor 24 may be a polarization image sensor. In the present approach, each pixel of the image sensor 24 can receive light of a first wavelength and convert the light into a signal.

As illustrated in FIGS. 2 and 4, the composite opening 26 has a first opening region 32 and a second opening region 34. That is, the composite opening 26 has at least two opening regions 32 and 34. In the present approach, the composite opening 26 further has a third opening region 36. The opening regions 32,34, and 36 may have any shape, and may be rotationally symmetric as illustrated in FIG. 4 or may have a stripe shape. In the present approach, the first opening region 32, the second opening region 34, and the third opening region 36 are defined by concentric boundaries. Therefore, the second opening region 34 and the third opening region 36 are considered to be the same opening region in the present approach.

The composite opening 26 is disposed on or near the imaging Fourier plane (imaging focal plane) of the image forming optical element 22 for imaging. The first opening region 32 and the second opening region 34 change (modify) the properties of the light incident thereon and then pass the light, or pass the light as is without changing (modifying) the properties. Here, the optical properties are a direction, a wavelength, a wavelength spectrum, polarization, luminance, illuminance, and a light flux (light amount) of the incident light beam.

In the present approach, it is assumed that the composite opening 26 is made of, for example, a glass plate, and the first opening region 32 and the second opening region 34 pass light of a first wavelength.

The composite opening 26 may include a shielding region 38. However, the shielding region 38 is not necessarily provided. In the present approach, the shielding region 38 is arranged so as to be connected to each of the first opening region 32 and the second opening region 34. In the present approach, the composite opening 26 has a shielding region 38 that shields light having a first wavelength, which is disposed between the first opening region 32 and the second opening region 34. The first light enters the shielding region 38, and then the light is shielded by reflection or absorption. The shielding region 38 may be formed on the glass surface by, for example, chromium vapor deposition. However, the present approach is not limited thereto, and the shielding region 38 may be any member as long as it shields light. The shielding region 38 may strongly reflect light, but it is desirable that the reflected light becomes stray light and does not become noise at the time of imaging. Therefore, it is desirable to take measures such as providing an inclination in a shape of the shielding region 38 to return the reflected light in a direction in which the reflected light does not become stray light.

The first opening region 32 in the composite opening 26 intersects with the imaging optical axis C1. That is, first opening region 32 includes the imaging optical axis C1. On the other hand, the second opening region 34 does not intersect with the imaging optical axis C1. That is, the second opening region 34 does not include the imaging optical axis C1. Therefore, the first opening region 32 and the second opening region 34 have different optical properties. Although details will be described later, the light reflected from an object point of the object S and passing through the first opening region 32 is substantially telecentric light. Then, such light is received by the image sensor 24, whereby a telecentric image can be acquired. On the other hand, the light reflected from the object point of the object S and passing through the second opening region 34 becomes substantially the entocentric light. Then, such light is received by the image sensor 24, whereby an entocentric image can be acquired. The entocentric light may include light that has passed through the first opening region 32 as well as the second opening region 34. In other words, an entocentric image can acquired by the light (reflected light) that has passed through both the first opening region 32 and the second opening region 34. However, in order to acquire the entocentric image, it is always necessary to acquire a light reception signal including light passing through the second opening region 34 by the image sensor. On the other hand, in order to acquire a telecentric image, it is always necessary to acquire a light reception signal of only light passing through the first opening region 32 by the image sensor 24.

The illumination portion 14 illustrated in FIG. 3 emits illumination light IL (see FIG. 1) including telecentric illumination. Here, the telecentric illumination is a substantially parallel light flux along the imaging optical axis C1. This is referred to as a first light flux IL1. Alternatively, it is also referred to as a first incident light flux IL1. The telecentric illumination includes a first wavelength. The first wavelength is, for example, 375 nm. However, the first wavelength is not limited thereto, and any first wavelength may be used. In the present approach, light of the first wavelength is generated by using an ultraviolet LED as a light source.

The illumination portion 14 may be any member that can emit illumination light including telecentric illumination formed by the first light flux IL1. As an example for realizing telecentric illumination, the illumination portion 14 of the present approach includes a projector 52, a light diffusion portion 54, and an image forming optical element 56 for illumination as illustrated in FIG. 3.

The projector 52 can form an image in the air or form an image on an object by using light from a light source in the projector 52. That is, the projector 52 can project an image in the air or the like. There are various types of projectors 52. The methods mainly used include digital light processing (DLP), liquid crystal display (LCD), and liquid crystal on silicon (LCoS).

The DLP projector is a technology using a large number of minute mirrors arranged on a chip called a digital micromirror device (DMD). Each mirror on the DMD chip changes an angle at which light is reflected by voltage control to form an image. In a case where the light source is white light, light from the light source is transmitted through a color wheel in the order of red, green, and blue, and is switched at high speed, so that a full-color video can be generated. Meanwhile, there is also a three-chip DLP projector using light sources of a plurality of colors and a plurality of DMD chips.

The LCD projector is a system in which light from a white light source is divided into three primary colors of red, green, and blue, and each of the three primary colors is passed through a transmissive liquid crystal panel to form a video. A voltage is applied to each pixel of each liquid crystal panel, and brightness is expressed by adjusting a light transmission amount. The transmitted light is synthesized by a prism and projected on a screen.

The LCoS projector uses a reflective liquid crystal technology having both features of LCD and DLP. Light is controlled using a liquid crystal instead of a DMD mirror while having a reflection type mechanism like DLP. The liquid crystal panel on the silicon substrate is irradiated with light, and transmittance of each pixel is adjusted to form a video. The light source is not limited to the LED, and may be a laser. Alternatively, a conventional lamp light source, for example, an incandescent lamp or a halogen lamp may be used.

The illumination portion 14 forms a first light emission region 58a on the illumination focal plane by the projector 52. The light diffusion portion 54 is disposed on the illumination focal plane, but the light diffusion portion 54 is not necessarily required. However, in a case where the illumination portion 14 includes the light diffusion portion 54, light reaches the entire surface or a wider range of the image forming optical element 56 for illumination, and there is an advantage that illuminance unevenness or the like of the illumination light can be uniformized. The light diffusion portion 54 may be frost glass that diffuses and transmits light, or may be a holographic diffuser. However, the light diffusion portion 54 is not limited thereto, and the light diffusion portion 54 may be anything as long as it diffuses light. The light passing through the first light emission region 58a illuminates the surface of the object S by the image forming optical element 56 for illumination. Here, the first light flux IL1 or the first incident light flux IL1 is formed at a first object point P1 and a second object point P2.

In the present approach, the illumination opening 58 is defined as a space region including the first light emission region 58a.

The illumination portion 14 includes an image forming optical element 56 for illumination having an illumination optical axis C2. The illumination Fourier plane of the image forming optical element 56 for illumination has the first light emission region 58a including the illumination optical axis C2. The first light emission region 58a forms telecentric illumination with a first light flux IL1 by emitting light of a first wavelength.

Next, the operation of the optical inspection apparatus 10 according to the present approach will be described.

It is assumed that a surface of the object S has a smooth surface orthogonal to the imaging optical axis C1. This is defined as an object surface. The first object point P1 is a plane. However, it is assumed that a minute defect D exists at the second object point P2. The minute defect D has irregularities in which a height difference fluctuates, and a height difference thereof is typically several 10 µm or less. However, the minute defect D is not limited to this, and may be any defect as long as the height difference fluctuates.

By the illumination portion 14, telecentric illumination (telecentric light) formed from the first light flux IL1 having the first wavelength is incident on the first object point P1 and the second object point P2 along the imaging optical axis C1 or the illumination optical axis C2. That is, the projector 52 projects an image toward the illumination Fourier plane of the image forming optical element 56 for illumination to form illumination including at least telecentric illumination.

Since the first object point P1 is a plane, the light flux IL1 incident on the first object point P1 is reflected such that the incident angle and the reflection angle are equal according to the law of specular reflection. Therefore, the light of the first wavelength from the first object point P1 is reflected along the imaging optical axis C1. This is referred to as a first-first light beam group L11. Then, the first-first light beam group L11 passes through the first opening region 32 of the composite opening 26 and is imaged at a first image point I1 on the image sensor 24 by the image forming optical element 22 for imaging of the imaging portion 12. Thus, the first object point P1 configures a telecentric image.

On the other hand, the second object point P2 has the minute defect D, and the light incident thereon is scattered and reflected in various directions as scattered light. In particular, assuming that the object S is reflective, a scattering angle distribution can be expressed by bidirectional reflectance direction function (BRDF). If the information on the scattering angle distribution is obtained, the information on the minute irregularities on the object surface can be obtained. For example, the scattering angle distribution in which light is specularly reflected on a flat object surface is narrowed. On the other hand, if minute irregularities are present on the object surface, the scattering angle distribution is generally wide. That is, scattered light in which the BRDF spreads is generated, and there is a component reflected obliquely with respect to the imaging optical axis C1. The reflected light of the first wavelength from the second object point P2 is defined as a second-first light beam group L21. The second-first light beam group L21 reaches not only the first opening region 32 but also the second opening region 34 on the imaging Fourier plane (imaging focal plane) by the image forming optical element 22 for imaging of the imaging portion 12. Then, an image is formed at a second image point I2 on the image sensor 24 through the opening regions 32 and 34. As a result, the second object point P2 configures an entocentric image.

The entocentric image is formed by a light beam group having a numerical aperture (NA) larger than that of the telecentric image. The numerical aperture is an important factor for determining the resolution of the optical system, and as the numerical aperture is larger, finer details can be captured. This is because, as the numerical aperture is simply larger, a brighter and clearer image can be acquired. Another reason is that a wave-like behavior of light influences the image. A point spread function (PSF) is used to quantitatively express the influence. The PSF depends on the numerical aperture and the wavelength of light, and is expressed as an airy disk in an ideal diffraction limit. The central portion of the airy disc is the brightest, and the diffraction ring spreads around the central portion. The diameter of the minimum diffraction spot can be made smaller as the numerical aperture increases. That is, the larger the numerical aperture, the smaller the imaging spot, and the smaller the blur of the image to be acquired. Therefore, as the numerical aperture is increased, the resolution of the image is improved. As described above, by the optical inspection apparatus 10 according to the present approach, the minute defect D becomes an entocentric image, and the plane becomes a telecentric image. Therefore, there is an effect that the resolution of the minute defect D is improved as compared with the periphery thereof and the image is clearly captured.

On the other hand, the magnification of the telecentric image becomes constant even if the position of the object S moves back and forth, and parallax and distortion do not occur. This has an effect of enabling precise dimension measurement of the object S. Further, there is an advantage that an image with uniform resolution can be acquired over the entire imaging field of view. That is, the resolution around the minute defect D can always be smaller than the resolution of the minute defect D. Therefore, there is an effect that the minute defect D can be clarified.

As described above, there is an effect that the optical inspection apparatus 10 according to the present approach can sharpen the minute defect D using only the light of the first wavelength.

The optical inspection apparatus 10 according to the present approach includes an illumination portion 14 capable of emitting illumination light including at least telecentric illumination, and an imaging portion 12 capable of simultaneously imaging telecentric light and entocentric light.

Therefore, according to the present approach, there is provided the optical inspection apparatus 10 capable of inspecting the fine structure (minute defect) of the object surface without dispersing the light from the illumination portion (light source) 14.

The illumination portion 14 forms telecentric illumination with a first light flux IL1 including light of a first wavelength, and the imaging portion 12 includes an image forming optical element 22 for imaging having an imaging optical axis C1 and a composite opening 26 arranged on an imaging Fourier plane of the image forming optical element 22 for imaging. The composite opening 26 includes at least a first opening region 32 including the imaging optical axis C1 and a second opening region 34 different from the first opening region. The first opening region 32 and the second opening region 34 pass light L11 and light L21 having the first wavelength, respectively.

Therefore, for example, the optical inspection apparatus 10 acquires the minute defect D on the object S as an entocentric image, and acquires a plane on the object S as a telecentric image. Therefore, there is an effect that the resolution of the minute defect D is improved as compared with the periphery thereof and the image is clearly captured.

In addition, the optical inspection method according to the present approach includes illuminating an object with illumination light including telecentric illumination, and simultaneously imaging telecentric light of reflected light from the object and entocentric light.

Therefore, according to the present approach, there is provided an optical inspection method capable of inspecting a fine structure (minute defect) of an object surface without dispersing light from the illumination portion (light source) 14.

In the optical inspection method, illuminating the object S includes forming the telecentric illumination with a first light flux IL1 including light of a first wavelength, and the capturing includes imaging telecentric light of the reflected light through a first opening region 32 arranged on an imaging Fourier plane of an image forming optical element 22 for imaging having an imaging optical axis C1, the first opening region 32 including the imaging optical axis C1 and passing the first wavelength, and capturing the image of the entocentric light of the reflected light through both a second opening region 34 including no imaging optical axis C1 different from the first opening region 32 and passing the first wavelength and the first opening region 32.

For this reason, for example, the minute defect D acquired by such an optical inspection method becomes an entocentric image, and the plane becomes a telecentric image. Therefore, there is an effect that the resolution of the minute defect D is improved as compared with the periphery thereof and the image is clearly captured.

Therefore, according to the present approach, there are provided the optical inspection apparatus 10 and the optical inspection method capable of inspecting the fine structure (minute defect) of the object surface without dispersing the light from the illumination portion (light source) 14.

### (Second Approach)

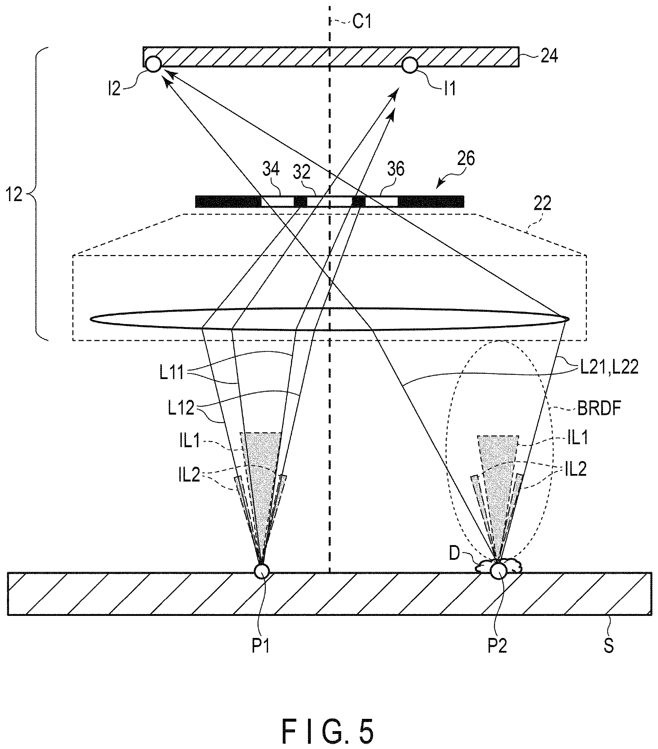

Next, a second approach will be described with reference to FIGS. 5 to 7. The present approach is a modification of the optical inspection apparatus 10 of the first approach, and the same members as those described in the first approach or members having the same functions are denoted by the same reference numerals as much as possible, and a detailed description thereof will be omitted.

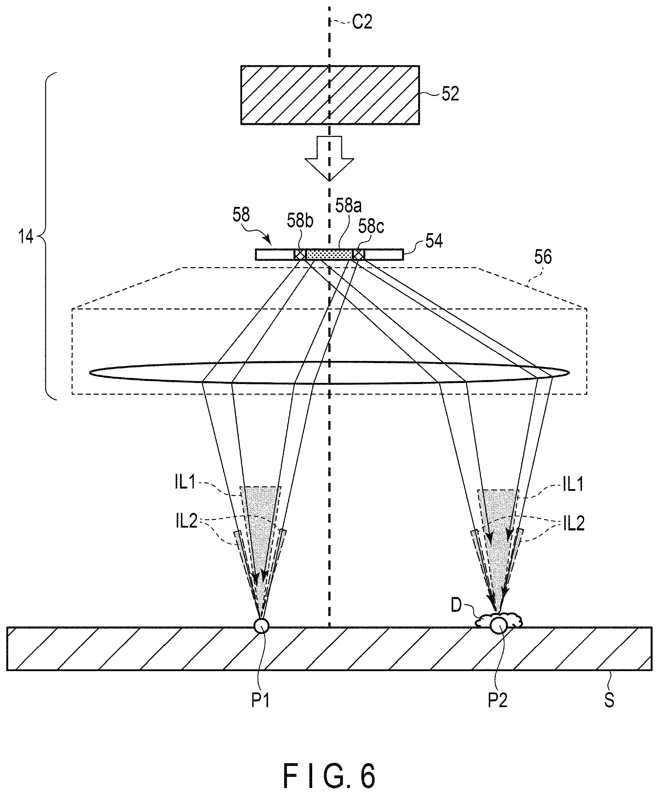

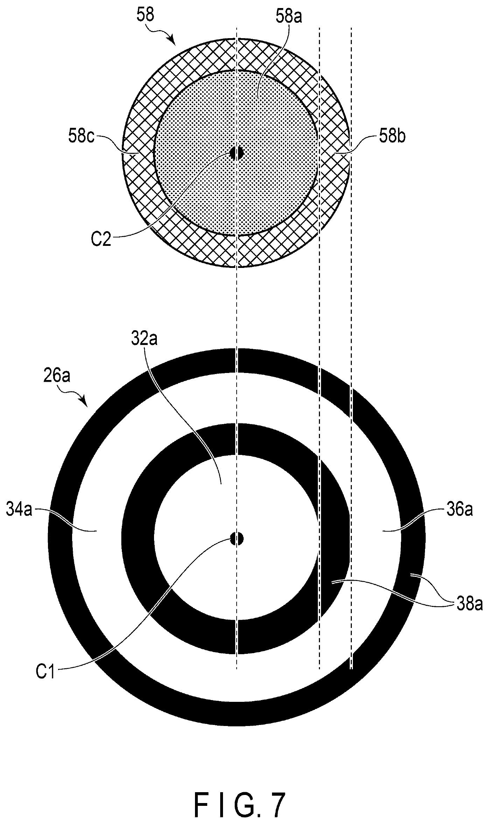

FIG. 5 is a schematic cross-sectional view illustrating a relationship between an imaging portion 12 of an optical inspection apparatus 10 and an object S to be inspected according to the present approach. FIG. 5 is a schematic cross-sectional view illustrating a relationship with the imaging portion 12. FIG. 5 also illustrates a light flux of the illumination light incident on the object S. FIG. 6 is a schematic cross-sectional view illustrating a relationship between the object S to be inspected and an illumination portion 14. FIG. 7 is a schematic view illustrating a composite opening 26 in a plane orthogonal to an imaging optical axis C1 of the imaging portion 12 in the optical inspection apparatus 10 according to the second approach and an illumination opening 58 in a plane orthogonal to an illumination optical axis C2 of the illumination portion 14.

As illustrated in FIG. 5, the imaging portion 12 according to the present approach has the same basic structure as that of the imaging portion 12 described in the first approach. Each pixel of an image sensor 24 can receive light of a first wavelength and convert the light into a signal.

The illumination portion 14 illustrated in FIG. 6 emits illumination light including telecentric illumination.

As illustrated in FIGS. 6 and 7, in the present approach, the illumination opening 58 is defined as a space region including a first light emission region 58a, a second light emission region 58b, and a third light emission region 58c. That is, the illumination opening 58 has the first light emission region 58a, the second light emission region 58b, and the third light emission region 58c. In the present approach, the shapes of the first light emission region 58a and the second light emission region 58b are defined by boundaries of concentric circles. Therefore, the second light emission region 58b and the third light emission region 58c are considered to be the same light emission region in the present approach.

The illumination portion 14 may be any member that can emit illumination light including telecentric illumination formed by the first light flux IL1. As an example for realizing telecentric illumination, the illumination portion 14 of the present approach includes a projector 52, a light diffusion portion 54, and an image forming optical element 56 for illumination as illustrated in FIG. 6. In the present approach, the projector 52 is a DLP type projector in which an LED that emits light having a first wavelength is used as a light source.

The illumination portion 14 forms the first light emission region 58a and the second light emission region 58b on an illumination focal plane by the projector 52. The light diffusion portion 54 is disposed on the illumination focal plane, but the light diffusion portion 54 is not necessarily required. However, in a case where the illumination portion 14 includes the light diffusion portion 54, light reaches the entire surface or a wider range of the image forming optical element 56 for illumination, and there is an advantage that illuminance unevenness or the like of the illumination light can be uniformized. The light passing through the first light emission region 58a illuminates the surface of the object S by the image forming optical element 56 for illumination. Here, the first light flux IL1 or the first incident light flux IL1 is formed at a first object point P1 and a second object point P2. The light passing through the second light emission region 58b illuminates the surface of the object S by the image forming optical element 56 for illumination. Here, a second light flux IL2 or a second incident light flux IL2 is formed at the first object point P1 and the second object point P2.

As described above, an illumination Fourier plane of the image forming optical element 56 for illumination has the first light emission region 58a and the second light emission region 58b different from the first light emission region 58a. The second light emission region 58b does not include the illumination optical axis C2, and forms oblique incidence illumination inclined with respect to the illumination optical axis C2 with the second light flux IL2 by the light emitted from the second light emission region 58b. The second light emission region 58b forms oblique illumination with the second light flux IL2 by emitting light of a first wavelength.

Light having a first optical property is emitted from the first light emission region 58a, and light having a second optical property is emitted from the second light emission region 58b. In the present approach, luminance is considered as the optical property. However, the optical property is not limited thereto, and the optical property may be a wavelength, polarized light, or the like. For example, it is assumed that the luminance as the first optical property is smaller than the luminance as the second optical property. As a result, the total light amount of the second light flux IL2 can be made sufficiently larger than the total light amount of the first light flux IL1. That is, the second light flux IL2 can be made sufficiently brighter than the first light flux IL1. However, the the relationship between the total light amounts of the first light flux IL1 and the second light flux IL2 is not limited thereto, and the first light flux IL1 may be brighter than the second light flux IL2. In any case, the optical properties of the light emitted from the first light emission region 58a and the second light emission region 58b are different.

It is assumed that both the light from the first light emission region 58a and the light from the second light emission region 58b include light of the first wavelength.

FIG. 7 illustrates the illumination opening 58 in a cross section orthogonal to the illumination optical axis C2. The illumination opening 58 is assumed to be in the light diffusion portion 54, for example. Here, the focal length of the image forming optical element 22 for imaging is defined as an imaging focal length, the focal length of the image forming optical element 56 for illumination is defined as an illumination focal length, and a similar composite opening 26a is obtained by performing similarity transformation on the composite opening 26 in terms of a ratio of the illumination focal length to the imaging focal length. In addition, those corresponding to the first opening region 32, the second opening region 34, and the third opening region 36 of the composite opening 26 are referred to as a first similar opening region 32a, a second similar opening region 34a, and a third similar opening region 36a, respectively. A region corresponding to the shielding region 38 of the composite opening 26 is referred to as a similar shielding region 38a. In the illumination Fourier plane, the first light emission region 58a is included in a region where the first similar opening region 32a and the similar shielding region 38a are combined, in a case where the similar composite opening 26a is compared on the same plane with the illumination optical axis C2 aligned with the imaging optical axis C1. The second light emission region 58b and the third light emission region 58c on the illumination Fourier plane (illumination focal plane) are included in the similar shielding region 38a in a case where the similar composite opening 26a is compared on the same plane with the illumination optical axis C2 aligned with the imaging optical axis C1.

Next, the operation of the optical inspection apparatus 10 according to the present approach will be described.

By the illumination portion 14, telecentric illumination (telecentric light) formed of the first light flux IL or the incident light flux IL1 having the first wavelength is incident on the first object point P1 and the second object point P2 along the imaging optical axis C1 or the illumination optical axis C2. Since the first object point P1 is a plane, the light flux IL1 incident on the first object point P1 is reflected along the imaging optical axis C1 according to the law of specular reflection. The light (reflected light) of the light flux IL1 from the first object point P1 is defined as a first light flux group L11. Then, the first light flux group L11 passes through the first similar opening region 32a of the similar composite opening 26a and forms an image on the image sensor 24. Thus, the first object point P1 configures a telecentric image.

At the same time, by the illumination portion 14, obliquely incident light formed from a second light flux IL2 or an incident light flux IL2 having the first wavelength is incident on the first object point P1 and the second object point P2 in a direction inclined to the imaging optical axis C1 or the illumination optical axis C2. Since the first object point P1 is a plane, light is reflected so that the incident angle and the reflection angle are the same with respect to the imaging optical axis C1 according to the law of specular reflection. The light (reflected light) of the light flux IL2 from the first object point P1 is defined as a first-second light beam group L12. Then, the first-second light beam group L12 reaches the similar shielding region 38a of the similar composite opening 26a and is shielded. Therefore, the first-second light beam group L12 is not imaged on the image sensor 24. This is because the light diffusion portion 54 and the similar composite opening 26a as the illumination opening 58 have a relationship illustrated in FIG. 7.

On the other hand, the second object point P2 has the minute defect D, generates scattered light in which the BRDF spreads, and has a component reflected obliquely with respect to the imaging optical axis C1. The light (reflected light) of the light flux IL1 from the second object point P2 is defined as a second-first light beam group L21. The second-first light beam group L21 reaches not only the first similar opening region 32a but also the second similar opening region 34a on the imaging Fourier plane (imaging focal plane). Then, an image is formed on the image sensor 24 through the similar opening regions 32a and 34a. As a result, the second object point P2 configures an entocentric image.

The light (reflected light) of the light flux IL2 from the second object point P2 is defined as a second-second light beam group L22. At this time, the reflected light from the second object point P2 is mixed with not only a second-first light beam group L21 scattered by the first light flux (incident light flux) IL1 but also a second-second light beam group L22 scattered by the second light flux (incident light flux) IL2. The second light flux (incident light flux) IL2 has a sufficiently larger light amount than the first light flux (incident light flux) IL1. Therefore, the light reflected from the second object point P2 in the combination of the second-first light beam group L21 with the second-second light beam group L22 has a sufficiently larger light amount than the light amount of only the second-first light beam group L21. That is, there is an effect that the minute defect D is made brighter and sharper.

The entocentric image is formed by a light beam group having a numerical aperture NA larger than that of the telecentric image. As described above, the numerical aperture is an important factor for determining the resolution of an optical system, and as the numerical aperture is larger, finer details can be captured. This is because a brighter and clearer image can be acquired as the numerical aperture is simply larger. In particular, in the present approach, there is an effect that the minute defect D having a wider BRDF is made sharper by a synergistic effect due to addition of the second light flux (incident light flux) IL2.

On the other hand, the magnification of the telecentric image becomes constant even if the position of the object S moves back and forth, and parallax and distortion do not occur. This has an effect of enabling precise dimension measurement of the object S. Further, there is an advantage that an image with uniform resolution can be acquired over the entire imaging field of view. That is, the resolution around the minute defect can always be smaller than the resolution of the minute defect. Therefore, there is an effect that minute defect can be clarified.

As described above, there is an effect that the optical inspection apparatus 10 according to the present approach can sharpen the minute defect D using only the light of the first wavelength.

Therefore, according to the present approach, there are provided the optical inspection apparatus 10 and the optical inspection method capable of inspecting the fine structure (minute defect) of the object surface without dispersing the light from the illumination portion (light source) 14.

### (Third Approach)

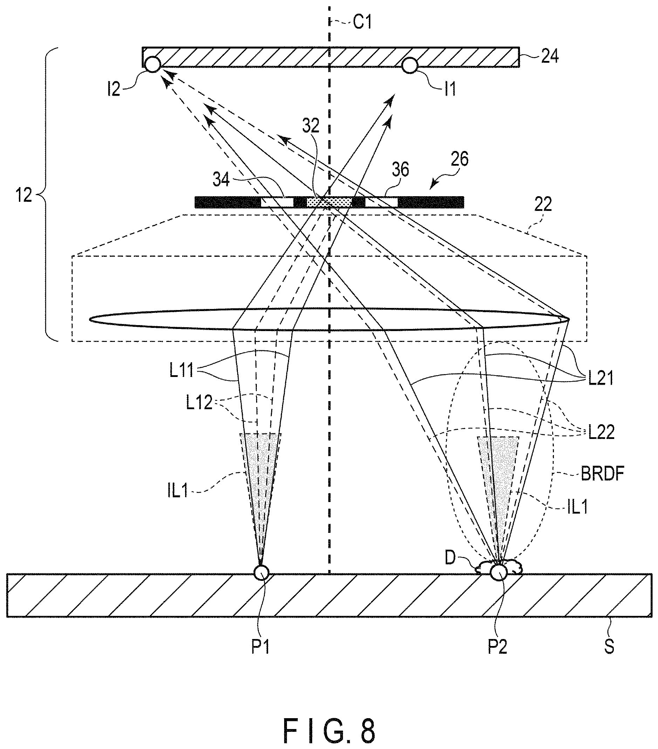

Next, a third approach will be described with reference to FIG. 8. The present approach is a modification of the optical inspection apparatus 10 of the first approach and the second approach, and the same members as the members described in the first approach and the second approach or members having the same functions are denoted by the same reference numerals as much as possible, and a detailed description thereof will be omitted.

FIG. 8 is a schematic cross-sectional view illustrating a relationship between an imaging portion 12 of an optical inspection apparatus 10 and an object S to be inspected according to the present approach.

Here, in the present approach, it is assumed that an image sensor 24 of the imaging portion 12 is a color image sensor, and light of a first wavelength and light of a second wavelength different from the first wavelength can be converted into independent signals in each pixel. Further, a projector 52 (see FIG. 3 or FIG. 6) of the illumination portion 14 can illuminate a first light flux (incident light flux) IL1 including the light of the first wavelength and the light of the second wavelength.

The illumination portion 14 emits illumination light including telecentric illumination. The telecentric illumination includes a first wavelength and a second wavelength. The first wavelength is, for example, 375 nm. However, the first wavelength is not limited thereto, and any first wavelength may be used. In the present approach, light of the first wavelength is generated by using an ultraviolet LED as a light source. The second wavelength is, for example, 650 nm. However, the second wavelength is not limited thereto, and the second wavelength may be any wavelength. It is assumed that the illumination light has a second light flux IL2 in a direction different from the first light flux IL1 forming the telecentric illumination, and the second light flux IL2 includes light of a second wavelength. The second opening region 34 allows light having a first wavelength and light having a second wavelength to pass therethrough.

The composite opening 26 of the imaging portion 12 has a first opening region 32, a second opening region 34, and a third opening region 36. In the present approach, the first opening region 32, the second opening region 34, and the third opening region 36 are defined by boundaries of concentric circles. Therefore, the second opening region 34 and the third opening region 36 are considered to be the same opening region in the present approach. The first opening region 32 and the second opening region 34 change (modify) the properties of the light incident thereon and then pass the light, or pass the light as is without changing (modifying) the properties. Here, the optical properties are a direction, a wavelength, a wavelength spectrum, polarization, luminance, illuminance, and a light flux (light amount) of the incident light flux. In the present approach, the composite opening 26 is made of, for example, a glass plate.

The first opening region 32 and the second opening region 34 pass light of a first wavelength. However, the first opening region 32 shields light of the second wavelength. On the other hand, the second opening region 34 allows not only light of the first wavelength but also light of the second wavelength to pass therethrough. For example, a dielectric multilayer film is applied or deposited on the first opening region 32, and shields light of the second wavelength. On the other hand, in the second opening region 34, for example, anti-reflection (AR) that suppresses reflection of light having the first wavelength and further increases transmittance is applied or deposited. However, the first opening region 32 and the second opening region 34 are not limited thereto. For example, the first opening region 32 may be made of UG-1 glass manufactured by Schott.

The composite opening 26 may include a shielding region 38 (see FIGS. 2 and 4). However, the shielding region 38 is not necessarily provided. In the present approach, the first opening region 32 and the second opening region 34 are directly connected. Then, the shielding region 38 is arranged outside the second opening region 34. In a case where light of the first wavelength and the second wavelength enters the shielding region 38, the light is shielded by reflection or absorption. The shielding region 38 may be formed on the glass surface by, for example, chromium vapor deposition. However, the present approach is not limited thereto, and the shielding region 38 may be any member as long as it shields light. The shielding region 38 may strongly reflect light, but it is desirable that the reflected light becomes stray light and does not become noise at the time of imaging. Therefore, it is desirable to take measures such as providing an inclination (taper) in the shape of the shielding region 38 to return the reflected light in a direction in which the reflected light does not become stray light.

The first opening region 32 in the composite opening 26 intersects with the imaging optical axis C1. That is, first opening region 32 includes the imaging optical axis C1. On the other hand, the second opening region 34 does not intersect with the imaging optical axis C1. That is, the second opening region 34 does not include the imaging optical axis C1. The light reflected from the object point of the object S and passing through the first opening region 32 is substantially telecentric light. Then, such light is received by the image sensor 24, whereby a telecentric image can be acquired. On the other hand, the light reflected from the object point of the object S and passing through the second opening region 34 becomes substantially the entocentric light. Then, such light is received by the image sensor 24, whereby an entocentric image can be acquired. The entocentric light may include light that has passed through the first opening region 32 as well as the second opening region 34. That is, the entocentric image can be acquired by the light passing through the first opening region 32 and the second opening region 34. However, in order to acquire an entocentric image, it is always necessary to acquire a light reception signal including light passing through the second opening region 34 by the image sensor 24. On the other hand, in order to acquire a telecentric image, it is always necessary to acquire a light reception signal of only light passing through the first opening region 32 by the image sensor 24.

The illumination portion 14 emits telecentric illumination formed by the first light flux IL1 including the first wavelength and the second wavelength.

In the present approach, the optical property is a wavelength. The first optical property has a first wavelength, and the second optical property has a second wavelength.

Next, the operation of the optical inspection apparatus 10 according to the present approach will be described.

It is assumed that a surface of the object S has a smooth surface orthogonal to the imaging optical axis C1. This is defined as an object surface. The first object point P1 is a plane. However, it is assumed that a minute defect D exists at the second object point P2. The minute defect is irregularities in which a height difference fluctuates, and a height difference is typically tens of micrometers or less. However, the minute defect is not limited to this, and may be any defect as long as the height difference fluctuates.

The first object point P1 is imaged on the first image point I1 on the image sensor 24 by the image forming optical element 22 for imaging of the imaging portion 12. Similarly, the second object point P2 is imaged on a second image point I2 on the image sensor 24. Since the first object point P1 is on a plane, light incident on the first object point P1 is reflected such that an incident angle and a reflection angle are equal according to the law of specular reflection. Since the minute defect D exists at the second object point P2, the light incident thereon is scattered and reflected in various directions as scattered light. In a case where this scattering angle distribution, that is, information on BRDF is obtained, information on minute irregularities on the object surface can be obtained. For example, the scattering angle distribution in which light is specularly reflected on a flat object surface is narrowed. On the other hand, if minute irregularities are present on the object surface, the scattering angle distribution is generally wide.

By the illumination portion 14, telecentric illumination (telecentric light) formed of a first light flux (or incident light flux) IL1 having a first wavelength and a second wavelength is incident on the first object point P1 and the second object point P2 along the imaging optical axis C1 or the illumination optical axis C2. Since the first object point P1 is a plane, the light is reflected along the imaging optical axis C1 according to the law of specular reflection. This is referred to as first light beam groups L11 and L12. L11 is a light beam group of the first wavelength from the first object point P1, and L12 is a light beam group of the second wavelength from the first object point P1. Among the first light beam groups L11 and L12, the first light beam group L11 having the first optical property (first wavelength) passes through the first opening region 32 of the composite opening 26 and forms an image on the image sensor 24. Thus, the first object point P1 configures a telecentric image. At the same time, among the first light beam groups L11 and L12, the first light beam group L12 having the second optical property (second wavelength) is shielded by the first opening region 32. Therefore, the first light beam group L12 having the second optical property, which is a light beam group obtained by reflecting the first light flux (or incident light flux) IL1 having the second optical property, is not imaged on the image sensor 24.

On the other hand, the second object point P2 has the minute defect D, generates scattered light in which the BRDF spreads, and has a component reflected obliquely with respect to the imaging optical axis C1. This is referred to as second light beam groups L21 and L22. L21 is a light beam group of the first wavelength from the second object point P2, and L22 is a light beam group of the second wavelength from the second object point P2. The second light beam groups L21 and L22 reach not only the first opening region 32 but also the second opening region 34 on the imaging Fourier plane (imaging focal plane). Then, the second light beam group L21 having the first optical property passes through the first opening region 32 and the second opening region 34, and the second light beam group L22 having the second optical property passes through the second opening region 34. On the other hand, the second light beam group L22 having the second optical property is shielded by the first opening region 32. Then, an image is formed on the image sensor 24 by the light beam groups L21 and L22 passing through the composite opening 26. As a result, the second object point P2 configures an entocentric image.

At this time, in the second light beam groups L21 and L22, not only the light having the first optical property but also the light in which the second light flux (incident light flux) IL2 having the second optical property is scattered on the object surface is mixed. That is, at the second image point I2, both the light fluxes L21 and L22 having the first optical property and the second optical property are received. On the other hand, at the first image point I1, only the light L11 having the first optical property is received. Therefore, the minute defect D is imaged with light having more wavelengths than that of a flat surface. This means that the image of the minute defect D is formed with a light amount larger than the light amount around the minute defect D. Furthermore, it means that the image is imaged with light of more wavelengths, that is, light of multiple colors. As a result, there is an effect that the minute defect D is brightened and sharpened, and is easily identified by color change or the number of colors.

The entocentric image is formed by a light beam group having a numerical aperture NA larger than that of the telecentric image. The numerical aperture is an important factor for determining the resolution of the optical system, and as the numerical aperture is larger, finer details can be captured. This is because a brighter and clearer image can be acquired as the numerical aperture is simply larger. In particular, in the present approach, there is an effect that the minute defect in which the BRDF becomes wider is more sharpened synergistically by adding the second light flux (incident light flux).

On the other hand, in the telecentric image, the magnification becomes constant even if the position of the object moves back and forth, and parallax and distortion do not occur. This has an effect of enabling precise dimension measurement of the object. Further, there is an advantage that an image with uniform resolution can be acquired over the entire imaging field of view. That is, the resolution around the minute defect can always be smaller than the resolution of the minute defect. Therefore, there is an effect that minute defect can be clarified.

As described above, there is an effect that the optical inspection apparatus 10 according to the present approach can sharpen minute defects using two wavelengths.

Therefore, according to the present approach, there are provided the optical inspection apparatus 10 and the optical inspection method capable of inspecting the fine structure (minute defect) of the object surface without dispersing the light from the illumination portion (light source) 14.

### (Fourth Approach)

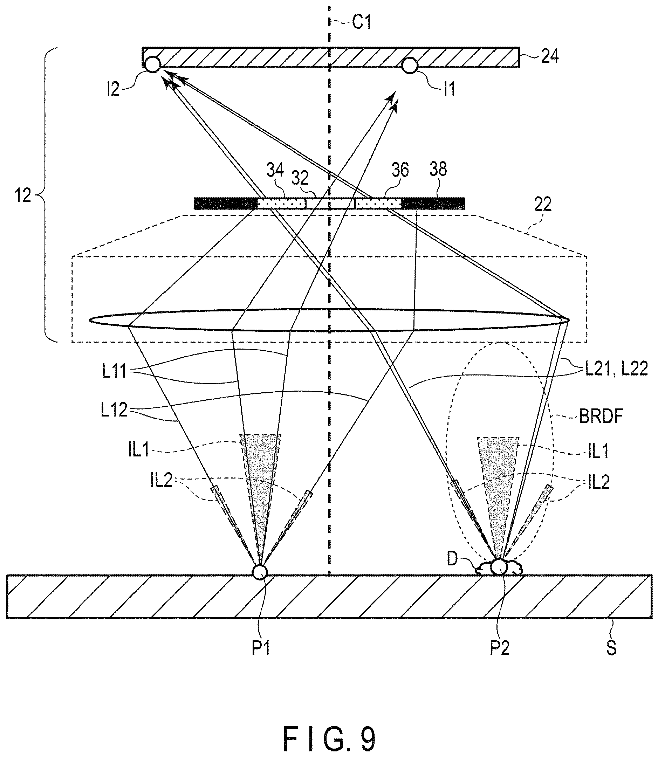

A fourth approach will be described with reference to FIGS. 9 to 11. The present approach is a modification of the third approach, and a difference will be described.

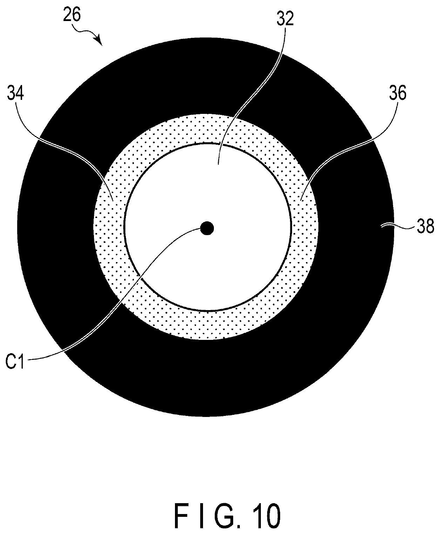

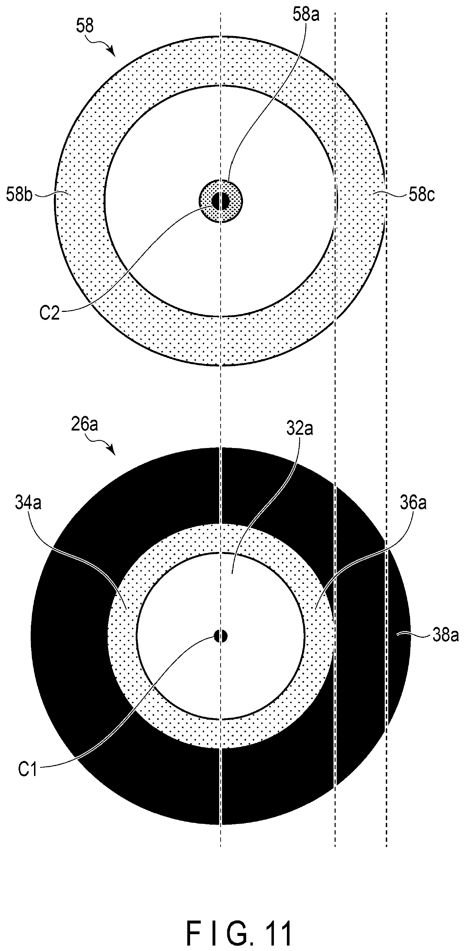

FIG. 9 is a schematic cross-sectional view illustrating a relationship between an object S to be inspected and an imaging portion 12 of an optical inspection apparatus 10 according to the fourth approach. FIG. 10 is a schematic view illustrating composite opening 26 in a plane orthogonal to an imaging optical axis C1 of the imaging portion 12 of the optical inspection apparatus 10 according to the fourth approach. FIG. 11 is a schematic view illustrating the composite opening 26 in a plane orthogonal to the imaging optical axis C1 of the imaging portion 12 of the optical inspection apparatus 10 according to the fourth approach and an illumination opening 58 in a plane orthogonal to an illumination optical axis C2 of an illumination portion 14.

Here, the first wavelength is 450 nm, and the second wavelength is 650 nm. An optical property is a wavelength, a first optical property is a first wavelength, and a second optical property is a second wavelength.

As illustrated in FIGS. 9 and 10, the composite opening 26 of the present approach is concentric. Therefore, a second opening region 34 and a third opening region 36 can be regarded as the same. The first opening region 32 is directly connected to the second opening region 34. In addition, the first opening region 32 allows not only the light having the first wavelength but also the light having the second wavelength to pass therethrough. The second opening region 34 allows light having the second wavelength to pass, but shields light having the first wavelength. In order to form such a composite opening 26, for example, a through hole may be provided at the center portion of a colored glass that transmits the light having the second wavelength and absorbs the light having the first wavelength, the through hole may be used as the first opening region 32, and the periphery thereof may be used as the second opening region 34.

The composite opening 26 includes a shielding region 38 around the second opening region 34. The shielding region 38 shields light of the first wavelength and light of the second wavelength.

A focal length of the image forming optical element 22 for imaging is defined as an imaging focal length, a focal length of the image forming optical element for illumination is defined as an illumination focal length, and a similar composite opening 26a illustrated in FIG. 11 is obtained by performing similar transformation on the composite opening 26 illustrated in FIG. 10 in terms of a ratio of the illumination focal length to the imaging focal length. Furthermore, those corresponding to the first opening region 32 and the second opening region 34 (third opening region 36) are referred to as a first similar opening region 32a and a second similar opening region 34a (third similar opening region 36a), respectively. A region corresponding to the shielding region 38 is a similar shielding region 38a.

As illustrated in FIG. 11, the illumination opening 58 includes a first light emission region 58a, a second light emission region 58b, and a third light emission region 58c. The illumination opening 58 is concentric. Therefore, the second light emission region 58b and the third light emission region 58c can be regarded as the same. Light of the first wavelength is emitted from the first light emission region 58a to form a first light flux (incident light flux) IL1 having a first optical property (first wavelength). Light of the second wavelength is emitted from the second light emission region 58b to form a second light flux (incident light flux) IL2 having a second optical property (second wavelength).

The second light emission region 58b and the third light emission region 58c on the illumination Fourier plane (illumination focal plane) are included in the similar shielding region 38a in a case where the similar composite opening 26a is compared on the same plane with the illumination optical axis C2 aligned with the imaging optical axis C1.

Next, the operation of the optical inspection apparatus 10 according to the present approach will be described.

The illumination portion 14 illuminates the object S with the first light flux (incident light flux) IL1 and the second light flux (incident light flux) IL2.

The light of the first wavelength having passed through the first light emission region 58a illuminates the surface of the object S by an image forming optical element 56 for illumination. Here, the first light flux IL1 or the first incident light flux IL1 is formed at a first object point P1 and a second object point P2. The light of the second wavelength having passed through the second light emission region 58b illuminates the surface of the object S by the image forming optical element 56 for illumination. Here, a second light flux IL2 or a second incident light flux IL2 is formed at the first object point P1 and the second object point P2.

By the illumination portion 14, telecentric illumination (telecentric light) formed of a first light flux (or incident light flux) IL1 having a first wavelength is incident on the first object point P1 and the second object point P2 along the imaging optical axis C1 or the illumination optical axis C2. Since the first object point P1 is a plane, the light is reflected along the imaging optical axis C1 according to the law of specular reflection. This is referred to as a first-first light flux group L11. The first-first light flux group L11 having the first optical property (first wavelength) passes through the first opening region 32 of the composite opening 26 and is imaged on the image sensor 24. Thus, the first object point P1 configures a telecentric image.

At the same time, by the illumination portion 14, obliquely incident light formed from the second light flux IL2 or the incident light flux IL2 having the second wavelength is incident on the first object point P1 and the second object point P2 in a direction inclined to the imaging optical axis C1 or the illumination optical axis C2. Since the first object point P1 is a plane, light is reflected so that the incident angle and the reflection angle are the same with respect to the imaging optical axis C1 according to the law of specular reflection. This is referred to as a first-second light flux group L12. Then, the first-second light flux group L12 reaches the shielding region 38 of the composite opening 26 and is shielded. Therefore, the first-second light flux group L12 is not imaged on the image sensor 24. This is because the light diffusion portion 54 and the composite opening 26 as the illumination opening 58 have a relationship illustrated in FIG. 11.

On the other hand, the second object point P2 has the minute defect D, generates scattered light in which the BRDF spreads, and has a component reflected obliquely with respect to the imaging optical axis C1. A second-first light flux group L21 of the first wavelength and a second-second light flux group L22 of the second wavelength from the second object point P2 reach not only the first opening region 32 but also the second opening region 34. However, the second opening region 34 shields second-first light flux group L21 of the first wavelength and passes the second-second light flux group L22 of the second wavelength. As a result, the second object point P2 configures an entocentric image. Then, an image is formed on the image sensor 24 through the opening regions 32 and 34.

At this time, the reflected light from the second object point P2 includes a second-second light flux group L22. Therefore, the reflected light from the second object point P2 includes light of the second wavelength. The first light emission region 58a has, for example, a small circular shape including the illumination optical axis C2, and the second light emission region 58b can have a sufficiently larger area than the first light emission region 58a. Therefore, the light amount of the second light flux IL2 having the second optical property (second wavelength) can be sufficiently larger than the light amount of the first light flux IL1. As a result, the minute defect D scatters the second light flux (incident light flux) IL2 having a large light amount, and generates the second-second light flux group L22 having a large light amount. Therefore, the optical inspection apparatus 10 according to the present approach has an effect of brightening and sharpening the minute defect D.

Therefore, according to the present approach, there are provided the optical inspection apparatus 10 and the optical inspection method capable of inspecting the fine structure (minute defect) of the object surface without dispersing the light from the illumination portion (light source) 14.

### (Fifth Approach)

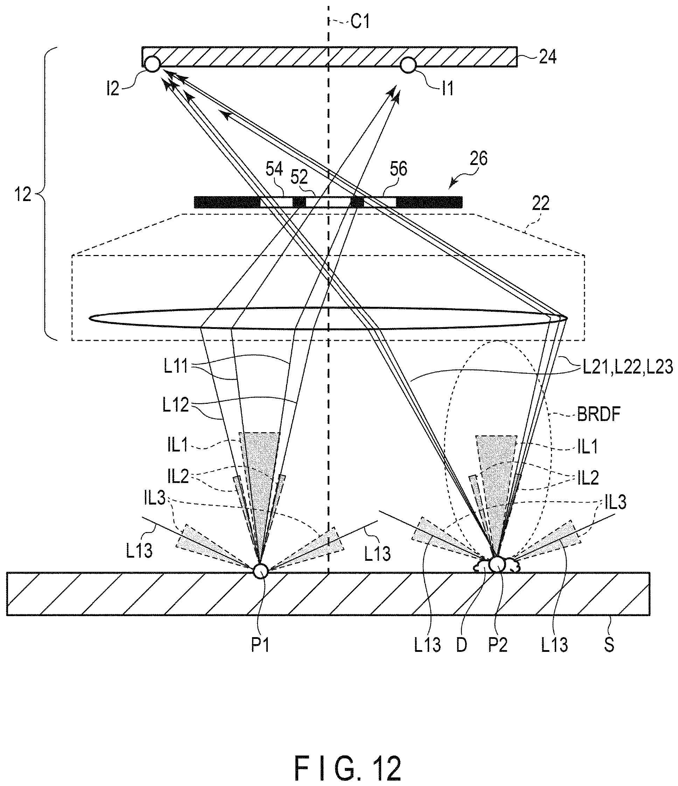

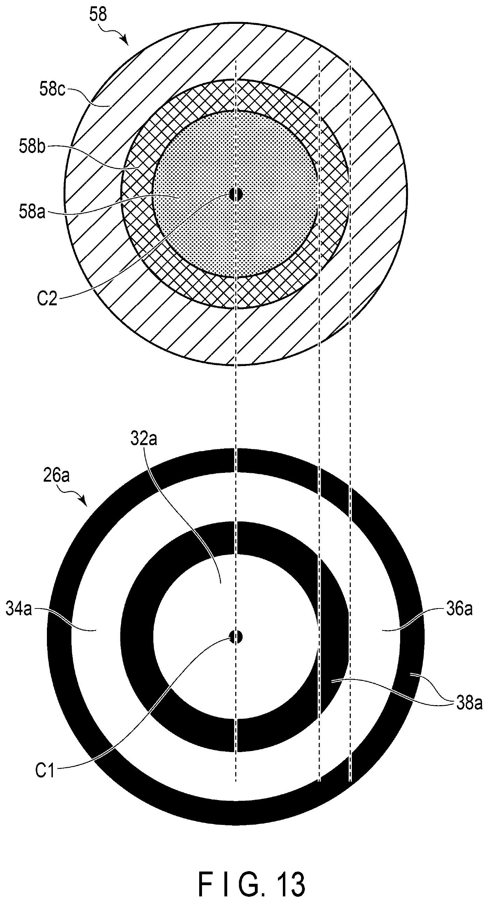

A fifth approach will be described with reference to FIGS. 12 and 13. The present approach is basically a modification of the second approach (see FIGS. 5 to 7) and the third approach (see FIG. 8), and a difference will be described.

FIG. 12 is a schematic cross-sectional view illustrating a relationship between an object S to be inspected and an imaging portion 12 of an optical inspection apparatus 10. FIG. 13 is a schematic view illustrating a composite opening 26 in a plane orthogonal to an imaging optical axis C1 of the imaging portion 12 of the optical inspection apparatus 10 according to the present approach and an illumination opening 58 in a plane orthogonal to an illumination optical axis C2 of an illumination portion 14.

In addition to a first wavelength, illumination light includes light having a second wavelength different from the light having the first wavelength, and light having a third wavelength different from the light having the first wavelength and the light having the second wavelength. The first wavelength is 450 nm, the second wavelength is 750 nm, and the third wavelength is 550 nm. These are blue light, red light, and green light. The image sensor 24 of the imaging portion 12 can convert the light of these wavelengths into independent signals in each pixel.

In the present approach, as illustrated in FIG. 13, an illumination opening 58 has a first light emission region 58a, a second light emission region 58b, and a third light emission region 58c. In the present approach, the shapes of the first light emission region 58a, the second light emission region 58b, and the third light emission region 58c are defined by boundaries of concentric circles. Therefore, the second light emission region 58b and the third light emission region 58c are considered as separate light emission regions in the present approach.

As described above, it is assumed that an illumination Fourier plane of an image forming optical element 56 for illumination has the third light emission region 58c different from the first light emission region 58a and the second light emission region 58b, and the second light emission region 58b and the third light emission region 58c do not include the illumination optical axis C2.

The illumination portion 14 forms the first light emission region 58a, the second light emission region 58b, and the third light emission region 58c on an illumination focal plane by, for example, a projector 52. The light diffusion portion 54 is disposed on the illumination focal plane, but the light diffusion portion 54 is not necessarily required. However, in a case where the illumination portion 14 includes the light diffusion portion 54, light reaches the entire surface or a wider range of the image forming optical element 56 for illumination, and there is an advantage that illuminance unevenness or the like of the illumination light can be uniformized.

In this manner, light having the first optical properties is emitted from the first light emission region 58a of the illumination opening 58, light having the second optical properties is emitted from the second light emission region 58b, and light having the third optical properties is emitted from the third light emission region 58c. The optical property is a wavelength, the first optical property is a first wavelength, the second optical property is a second wavelength, and the third optical property is a third wavelength. Therefore, the first light emission region 58a allows the light having the first wavelength among the light including the first wavelength, the second wavelength, and the third wavelength from the projector 52 to pass therethrough, but shields the light having the second wavelength and the third wavelength. The second light emission region 58b allows the light having the second wavelength among the light including the first wavelength, the second wavelength, and the third wavelength from the projector 52 to pass therethrough, but shields the light having the first wavelength and the third wavelength. The third light emission region 58c allows light of a third wavelength among light including the first wavelength, the second wavelength, and the third wavelength from the projector 52 to pass therethrough, but shields light of the first wavelength and the second wavelength.

The first light emission region 58a forms substantially parallel illumination (telecentric illumination) along the imaging optical axis C1 with a first light flux by emitting light of a first wavelength. The second light emission region 58b forms oblique illumination with a second light flux by emitting light of a second wavelength. The third light emission region 58c forms oblique illumination with a third light flux by emitting light of a third wavelength.

The composite opening 26 in the present approach is concentric. Therefore, a second opening region 34 and a third opening region 36 can be regarded as the same. The first opening region 32, the second opening region 34, and the third opening region 36 allow light of a first wavelength, a second wavelength, and a third wavelength to pass therethrough.

It is assumed that the composite opening 26 according to the present approach is a similar composite opening 26a. Those corresponding to the first opening region 32, the second opening region 34, and the third opening region 36 of the composite opening 26 are referred to as a first similar opening region 32a, a second similar opening region 34a, and a third similar opening region 36a, respectively. A region corresponding to the shielding region 38 of the composite opening 26 is referred to as a similar shielding region 38a. The first light emission region 58a in the illumination Fourier plane is included in the first similar opening region 32a in a case where the similar composite opening 26a is compared on the same plane with the illumination optical axis C2 aligned with the imaging optical axis C1. The second light emission region 58b and the third light emission region 58c on the illumination Fourier plane (illumination focal plane) are included in the similar shielding region 38a in a case where the similar composite opening 26a is compared on the same plane with the illumination optical axis C2 aligned with the imaging optical axis C1.

The composite opening 26 may include a shielding region 38 (see FIGS. 2 and 4). However, the shielding region 38 is not necessarily provided. In the present approach, the first opening region 32 and the second opening region 34 are directly connected.

Next, the operation of the optical inspection apparatus 10 according to the present approach will be described.

The illumination portion 14 illuminates the object S with a first light flux (incident light flux) IL1, a second light flux (incident light flux) IL2, and a third light flux (incident light flux) IL3 different from the first light flux IL1 and the second light flux IL2.

The light of the first wavelength having passed through the first light emission region 58a illuminates the surface of the object S by an image forming optical element 56 for illumination. Here, the first light flux IL1 or the first incident light flux IL1 is formed at a first object point P1 and a second object point P2. The light of the second wavelength having passed through the second light emission region 58b illuminates the surface of the object S by the image forming optical element 56 for illumination. Here, a second light flux IL2 or a second incident light flux IL2 is formed at the first object point P1 and the second object point P2. The light of the third wavelength having passed through the third light emission region 58c illuminates the surface of the object S by the image forming optical element 56 for illumination. Here, the third light flux IL3 or the third incident light flux IL3 is formed at the first object point P1 and the second object point P2.

By the illumination portion 14, telecentric illumination (telecentric light) formed of a first light flux (or incident light flux) IL1 having a first wavelength is incident on the first object point P1 and the second object point P2 along the imaging optical axis C1 or the illumination optical axis C2. Since the first object point P1 is a plane, the light is reflected along the imaging optical axis C1 according to the law of specular reflection. This is referred to as a first-first light flux group L11. The first-first light flux group L11 having the first optical property (first wavelength) passes through the first opening region 32 of the composite opening 26 and is imaged on the image sensor 24. Thus, the first object point P1 configures a telecentric image.

At the same time, by the illumination portion 14, obliquely incident light formed from the second light flux IL2 or the incident light flux IL2 having the second wavelength is incident on the first object point P1 and the second object point P2 in a direction inclined to the imaging optical axis C1 or the illumination optical axis C2. Since the first object point P1 is a plane, light is reflected so that the incident angle and the reflection angle are the same with respect to the imaging optical axis C1 according to the law of specular reflection. This is referred to as a first-second light flux group L12. Then, the first-second light flux group L12 reaches the similar shielding region 38 of the composite opening 26 and is shielded. Therefore, the first-second light flux group L12 is not imaged on the image sensor 24. This is because the light diffusion portion 54 and the similar composite opening 26a as the illumination opening 58 have a relationship illustrated in FIG. 13.

At the same time, by the illumination portion 14, obliquely incident light formed from the third light flux IL3 or the incident light flux IL3 having the third wavelength is incident on the first object point P1 and the second object point P2 in a direction inclined to the imaging optical axis C1 or the illumination optical axis C2. The third light flux IL3 is inclined to the imaging optical axis C1 or the illumination optical axis C2 more than the second light flux IL2. Since the first object point P1 is a plane, light is reflected so that the incident angle and the reflection angle are the same with respect to the imaging optical axis C1 according to the law of specular reflection. This is referred to as a first-third light beam group L13. Then, the first-third light beam group L13 reaches the shielding region 38 of the composite opening 26 and is shielded. Therefore, the first-third light beam group L13 is not imaged on the image sensor 24. Therefore, in a case where the third light flux IL3 is reflected by the first object point P1 on the plane of the object S, the reflected light does not reach the imaging portion 12. That is, the light flux IL3 having the third optical property does not reach the image forming optical element 22 for imaging of the imaging portion 12 even if the light flux IL3 is reflected by the plane of the object S. This is because the light diffusion portion 54 and the similar composite opening 26a as the illumination opening 58 have a relationship illustrated in FIG. 13. At this time, there is an effect that stray light due to the third light flux IL3 is not generated in the imaging portion 12.

On the other hand, the second object point P2 has the minute defect D, generates scattered light in which the BRDF spreads, and has a component reflected obliquely with respect to the imaging optical axis C1. The second-first light flux group L21 having the first wavelength, the second-second light flux group L22 having the second wavelength, and the second-third light flux group L23 having the third wavelength from the second object point P2 reach not only the first opening region 32 but also the second opening region 34. As a result, the second object point P2 configures an entocentric image. Then, an image is formed on the image sensor 24 through the opening regions 32 and 34. At this time, the reflected light from the second object point P2 includes a second-first light beam group L21, a second-second light beam group L22, and a second-third light beam group L23. Therefore, the reflected light from the second object point P2 includes the light of the first wavelength, the light of the second wavelength, and the light of the third wavelength. Therefore, the reflected light from the second object point P2 can obtain a large pixel value as compared with the case of including only the light of the first wavelength like the reflected light from the first object point P1 (the first-first light beam group L11). That is, there is an effect that the minute defect D is made brighter and sharper.

In addition, the light amount of the third light flux IL3 can be sufficiently large. Therefore, the optical inspection apparatus 10 according to the present approach has an effect of brightening and sharpening the minute defect D.

In addition, the optical inspection apparatus 10 according to the present approach has an effect that it is possible to acquire BRDF information of the minute defect D and to acquire more detailed information on the minute defect D by analyzing the relative intensity of the pixel value with respect to each of blue light, red light, and green light from the image of the minute defect D.

Therefore, according to the present approach, there are provided the optical inspection apparatus 10 and the optical inspection method capable of inspecting the fine structure (minute defect) of the object surface without dispersing the light from the illumination portion (light source) 14.

According to at least one approach described above, it is possible to provide the optical inspection apparatus 10 and the optical inspection method capable of inspecting the fine structure (minute defect) of the object surface without dispersing the light from the illumination portion (light source) 14.

The present disclosure also encompasses the following approaches of an optical inspection apparatus and an optical inspection method:
1. An optical inspection apparatus comprising:
   an illumination portion configured to emit illumination light including at least telecentric illumination; and
   an imaging portion configured to simultaneously capture telecentric light and entocentric light.
2. The optical inspection apparatus according to clause 1, wherein
   the illumination portion forms the telecentric illumination with a first light flux including light of a first wavelength,
   the imaging portion includes an image forming optical element for imaging having an imaging optical axis and a composite opening arranged on an imaging Fourier plane of the image forming optical element for imaging, and
   the composite opening includes at least a first opening region including the imaging optical axis and a second opening region having an optical property different from that of the first opening region, and
   the first opening region and the second opening region pass light having the first wavelength.
3. The optical inspection apparatus according to clause 2, wherein
   the first opening region and the second opening region are connected by a shielding region that shields the light having the first wavelength, or are directly connected to each other with different optical properties.
4. The optical inspection apparatus according to clause 3, wherein
   the illumination light includes light having a second wavelength different from the light having the first wavelength,
   the first opening region allows the light having the first wavelength to pass therethrough and shields the light having the second wavelength, and
   the second opening region allows the light having the first wavelength to pass therethrough and allows the light having the second wavelength to pass therethrough.
5. The optical inspection apparatus according to clause 2, wherein
   the illumination portion includes an image forming optical element for illumination having an illumination optical axis, and
   the illumination Fourier plane of the image forming optical element for illumination has a first light emission region including the illumination optical axis, and
   the first light emission region forms the telecentric illumination with the first light flux by emitting the light of the first wavelength.
6. The optical inspection apparatus according to clause 5, wherein
   the illumination Fourier plane of the image forming optical element for illumination has a second light emission region different from the first light emission region, and
   the second light emission region does not include the illumination optical axis, and forms obliquely incident illumination inclined with respect to the illumination optical axis with a second light flux of light emitted from the second light emission region.
7. The optical inspection apparatus according to clause 6, wherein
   assuming that a focal length of the image forming optical element for imaging is an imaging focal length, a focal length of the image forming optical element for illumination is an illumination focal length, a similar composite opening is obtained by performing similar transformation on the composite opening by a ratio of the illumination focal length to the imaging focal length, and a first similar opening region is obtained by corresponding to the first opening region, and
   the first light emission region in the illumination Fourier plane is included in the first similar opening region in a case where the similar composite opening is compared on the same plane with the illumination optical axis aligned with the imaging optical axis.
8. The optical inspection apparatus according to clause 6, wherein
   the second light emission region forms oblique illumination with a second light flux by emitting the light of the first wavelength.
9. The optical inspection apparatus according to clause 6, wherein
   the illumination light includes, in addition to the first wavelength, light of a second wavelength different from the light of the first wavelength, and light of a third wavelength different from the light of the first wavelength and the light of the second wavelength,
   the illumination Fourier plane of the image forming optical element for illumination has a third light emission region different from the first light emission region and the second light emission region, and the third light emission region does not include the illumination optical axis, and
   the third light emission region forms oblique illumination with a third light flux by emitting the light of the third wavelength.
10. The optical inspection apparatus according to clause 5, wherein
   the illumination portion includes a projector capable of projecting an image, and
   the illumination portion forms illumination including at least the telecentric illumination by projecting an image by the projector toward the illumination Fourier plane of the image forming optical element for illumination.
11. The optical inspection apparatus according to clause 7, wherein
   the composite opening has a shielding region that shields the light having the first wavelength between the first opening region and the second opening region,
   a region corresponding to the shielding region of the similar composite opening is set as a similar shielding region, and
   the second light emission region in the illumination Fourier plane is included in the similar shielding region in a case where the similar composite opening is compared on the same plane with the illumination optical axis aligned with the imaging optical axis.
12. The optical inspection apparatus according to clause 2, wherein
   the illumination light includes light having a second wavelength different from the light having the first wavelength,
   the illumination light has a second light flux in a direction different from a direction of the first light flux forming the telecentric illumination, and the second light flux includes the light of the second wavelength, and
   the second opening region allows light of the first wavelength and the second wavelength to pass therethrough.
13. The optical inspection apparatus according to clause 12, wherein
   the illumination light has a third light flux different from the first light flux and the second light flux, and the third light flux includes light having a third wavelength different from the first wavelength and the second wavelength, and
   the second opening region allows light of the first wavelength, the second wavelength, and the third wavelength to pass therethrough.
14. An optical inspection method comprising:
   illuminating an object with illumination light including telecentric illumination; and
   capturing images of telecentric light and entocentric light of reflected light from the object at the same time.
15. The optical inspection method according to clause 14, wherein
   illuminating the object includes forming the telecentric illumination with a first light flux including light of a first wavelength, and
   the capturing includes:
      imaging telecentric light of the reflected light through a first opening region arranged on an imaging Fourier plane of an image forming optical element for imaging having an imaging optical axis, the first opening region including the imaging optical axis and passing the first wavelength, and
      capturing the image of the entocentric light of the reflected light through both a second opening region that has a different optical property from that of the first opening region and does not include the imaging optical axis and allows the first wavelength to pass therethrough and the first opening region.

While certain approaches have been described, these approaches have been presented by way of example only, and are not intended to limit the scope of the inventions. Indeed, the optical inspection apparatus, the optical inspection system, the optical inspection method, and the optical inspection program described herein may be embodied in a variety of other forms; furthermore, various omissions, substitutions and changes in the form of the approaches described herein may be made.

## Claims

1. An optical inspection apparatus comprising:
an illumination portion configured to emit illumination light including at least telecentric illumination; and
an imaging portion configured to simultaneously capture telecentric light and entocentric light.

2. The optical inspection apparatus according to claim 1, wherein
the illumination portion forms the telecentric illumination with a first light flux including light of a first wavelength,
the imaging portion includes an image forming optical element for imaging having an imaging optical axis and a composite opening arranged on an imaging Fourier plane of the image forming optical element for imaging, and
the composite opening includes at least a first opening region including the imaging optical axis and a second opening region having an optical property different from that of the first opening region, and
the first opening region and the second opening region pass light having the first wavelength.

3. The optical inspection apparatus according to claim 2, wherein
the first opening region and the second opening region are connected by a shielding region that shields the light having the first wavelength, or are directly connected to each other with different optical properties.

4. The optical inspection apparatus according to claim 3, wherein
the illumination light includes light having a second wavelength different from the light having the first wavelength,
the first opening region allows the light having the first wavelength to pass therethrough and shields the light having the second wavelength, and
the second opening region allows the light having the first wavelength to pass therethrough and allows the light having the second wavelength to pass therethrough.

5. The optical inspection apparatus according to claim 2, wherein
the illumination portion includes an image forming optical element for illumination having an illumination optical axis, and
the illumination Fourier plane of the image forming optical element for illumination has a first light emission region including the illumination optical axis, and
the first light emission region forms the telecentric illumination with the first light flux by emitting the light of the first wavelength.

6. The optical inspection apparatus according to claim 5, wherein
the illumination Fourier plane of the image forming optical element for illumination has a second light emission region different from the first light emission region, and
the second light emission region does not include the illumination optical axis, and forms obliquely incident illumination inclined with respect to the illumination optical axis with a second light flux of light emitted from the second light emission region.

7. The optical inspection apparatus according to claim 6, wherein
assuming that a focal length of the image forming optical element for imaging is an imaging focal length, a focal length of the image forming optical element for illumination is an illumination focal length, a similar composite opening is obtained by performing similar transformation on the composite opening by a ratio of the illumination focal length to the imaging focal length, and a first similar opening region is obtained by corresponding to the first opening region, and
the first light emission region in the illumination Fourier plane is included in the first similar opening region in a case where the similar composite opening is compared on the same plane with the illumination optical axis aligned with the imaging optical axis.

8. The optical inspection apparatus according to claim 6, wherein
the second light emission region forms oblique illumination with a second light flux by emitting the light of the first wavelength.

9. The optical inspection apparatus according to claim 6, wherein
the illumination light includes, in addition to the first wavelength, light of a second wavelength different from the light of the first wavelength, and light of a third wavelength different from the light of the first wavelength and the light of the second wavelength,
the illumination Fourier plane of the image forming optical element for illumination has a third light emission region different from the first light emission region and the second light emission region, and the third light emission region does not include the illumination optical axis, and
the third light emission region forms oblique illumination with a third light flux by emitting the light of the third wavelength.

10. The optical inspection apparatus according to claim 5, wherein
the illumination portion includes a projector capable of projecting an image, and
the illumination portion forms illumination including at least the telecentric illumination by projecting an image by the projector toward the illumination Fourier plane of the image forming optical element for illumination.

11. The optical inspection apparatus according to claim 7, wherein
the composite opening has a shielding region that shields the light having the first wavelength between the first opening region and the second opening region,
a region corresponding to the shielding region of the similar composite opening is set as a similar shielding region, and
the second light emission region in the illumination Fourier plane is included in the similar shielding region in a case where the similar composite opening is compared on the same plane with the illumination optical axis aligned with the imaging optical axis.

12. The optical inspection apparatus according to claim 2, wherein
the illumination light includes light having a second wavelength different from the light having the first wavelength,
the illumination light has a second light flux in a direction different from a direction of the first light flux forming the telecentric illumination, and the second light flux includes the light of the second wavelength, and
the second opening region allows light of the first wavelength and the second wavelength to pass therethrough.

13. The optical inspection apparatus according to claim 12, wherein
the illumination light has a third light flux different from the first light flux and the second light flux, and the third light flux includes light having a third wavelength different from the first wavelength and the second wavelength, and
the second opening region allows light of the first wavelength, the second wavelength, and the third wavelength to pass therethrough.

14. An optical inspection method comprising:
illuminating an object with illumination light including telecentric illumination; and
capturing images of telecentric light and entocentric light of reflected light from the object at the same time.

15. The optical inspection method according to claim 14, wherein
illuminating the object includes forming the telecentric illumination with a first light flux including light of a first wavelength, and
the capturing includes:
imaging telecentric light of the reflected light through a first opening region arranged on an imaging Fourier plane of an image forming optical element for imaging having an imaging optical axis, the first opening region including the imaging optical axis and passing the first wavelength, and
capturing the image of the entocentric light of the reflected light through both a second opening region that has a different optical property from that of the first opening region and does not include the imaging optical axis and allows the first wavelength to pass therethrough and the first opening region.
